# EUROPÄISCHE PATENTSCHRIFT

(11) **EP 0 504 557 B1**
(45) Veröffentlichungstag und Bekanntmachung des Hinweises auf die Patenterteilung: **01.06.1994**
(21) Anmeldenummer: 92101280.3
(22) Anmeldetag: 27.01.1992
(51) Int. Cl.: F16G 11/12, B60P 7/08

(54) **Spann- und Zurrvorrichtung für Zurrstränge**
Tightening and tensioning device for tensioning lines
Dispositif de tension et d'amarrage pour sangles d'amarrage

(30) Priorität: 08.03.1991 DE 9102777 U
(43) Veröffentlichungstag der Anmeldung: 23.09.1992
(73) Patentinhaber: SPANSET INTER AG, CH-8618 Oetwil am See (CH)
(72) Erfinder: Kämper, Hans-Werner, W-5102 Würselen (DE)
(74) Vertreter: Tergau, Enno, Dipl.-Ing.

(56) Entgegenhaltungen:
- EP-A- 0 455 085
- DE-C- 3 344 487
- GB-A- 2 108 616

## Beschreibung

Die vorliegende Erfindung betrifft eine Vorrichtung zum Spannen und Zurren von Zurrsträngen mit den Merkmalen des Oberbegriffs des Anspruchs. Solche häufig auch als Spannratschen bezeichneten Vorrichtungen weisen eine Spannwelle zum Aufwickeln des Zurrstranges von seinem Zurrstrangfreiende her auf. Aufgrund der durch das Aufwickeln des Zurrstranges entsehenden Zurrstrangverkürzung entsteht die Zurrspannung im Zurrstrang.

Zur Verhinderung des Rückdrehens während des Spannvorgangs ist die Spannwelle gegen ihre Spannrichtung mittels eines Gesperres sperrbar. Dieses Gesperre sperrt die Aufwickelwelle auch in Ihrer Endstellung bei vollständig gespanntem oder gezurrtem Zurrstrang.

Derartige Gesperre sind beispielsweise aus **Richter-v.Voss, Bauelemente** **der Feinmechanik, 9. Aufl., 1964, S. 262** bekannt. Ein Gesperre setzt sich danach im wesentlichen aus einem Sperrer und einem Sperrstück zusammen. Ferner ist bekannt, zur Verkleinerung der Sperrsprünge mehrere Sperrer oder Sperrklinken zu verwenden, siehe **Lueger, Lexikon der Technik,** **Bd. 1, 1960, S. 530.**

Insbesondere die in **Richter-v.Voss (aaO)** genannten Richtgesperre ermöglichen es, durch Drehen der Spannwelle in Spannrichtung die Zurrkraft schrittweise in den Zurrstrang einzuleiten bei gleichzeitiger Sicherung gegen Rückdrehung der Spannwelle. Bei den gattungsmaßigen Spann- und Zurrvorrichtungen, insbesondere Spannratschen, ist es üblich, die Sperrer nicht als Sperrklinken sondern als Sperrschieber auszuführen. Die Sperrklinken sind nämlich um ein Drehgelenk schwenkbar gelagert und von einem Federelement druckbeaufschlagt. Zur Übertragung großer Kräfte müssen die Sperrklinken und die Federelemente sehr groß ausgeführt sein. Mit Sperrschiebern als Sperrer ist demgegenüber grundsätzlich ein platzsparenderer Aufbau der Vorrichtung möglich. Zudem sind über derartige Sperrschieber hohe Kräfte übertragbar.

Die Sperrschieber greifen in Eingriffsstellung in eine vom Sperrad getragene Verzahnung ein. Diese Verzahnung ist derart gerichtet, daß die Sperrschieber die steilen Vorderflanken der Sperrzähne zum Sperren formschlüssig hintergreifen, während die Sperrschieber bei gedrehtem Sperrad die ausgerundeten Rückzahnflanken mit ihren Stirnseiten übergleiten.

Bei jedem Sperrschritt verfahren die Sperrschieber zur Überwindung eines Sperrzahnes in einer translatorischen Bewegungsrichtung aus der Eingriffstellung in eine Außereingriffstellung. Die Sperrschieber sind hierfür an der Grundkonsole der Vorrichtung, vorzugsweise an den Konsolenseitenwänden translatorisch verfahrbar gelagert. Die Konsolenseitenwänden müssen daher so ausgeführt sein, daß der notwendige Weg für die Translationsbewegung vorhanden ist. Die Sperrschieber fahren am Ende des Sperrschritts nach dem Überwinden des Sperrzahnes mit einer Translationsbewegung aus der Außereingriffsstellung wieder in die Eingriffsstellung wieder radial in die Verzahnung ein.

Um in kleineren, von der Zahnteilung des Sperrades abweichenden Schritten sperren zu können, oder um Zurrkräfte aufnehemen zu können, die von einem Sperrschieber oder einer Sperrklinke allein nicht aufgenommen werden können, werden nach dem Stand der Technik mehrere Sperrschieber radial über den Sperradumfang verteilt angeordnet. Aufgrund dieser radialen Anordnung der Sperrschieber zum Sperrad wächst die Bauhöhe der Grundkonsole mit der Zahl der radial am Sperradumfang verteilten Sperrschieber an. Die Konsolenseitenwand muß nämlich eine so große Bauhöhe aufweisen, daß genügend Bewegungsraum für die Translationsbewegung eines jeden Sperrschiebers zur Verfügung steht.

Zur Reduzierung der Bauhöhe einer derartigen Vorrichtung mit zwei Sperrschiebern ist es daher notwendig, daß beide Sperrschieber zumindest nach Art von Schenkeln eines spitzen Winkels, besser möglichst parallel zueinander verlaufen. Eine Vorrichtung mit derartig parallel zueinander liegenden Sperrschiebern ist aus
**DE-C-33 44 487**
bekannt. Nachteilig bei dieser bekannten Vorrichtung ist die Zweiteilung des Sperrelements, um die beiden parallelen Sperrschieber zu erhalten. Mit zwei derartig parallelen Sperrschiebern können nur kleine Zahnteilungen gestuft werden. Ist die Zahnteilung zu groß, müßten die Schieber ungewöhnlich hoch aufbauend ausgeführt sein.

Ferner nachteilig ist bei der bekannten Vorrichtung, daß die Sperrschieber stets mit denselben Sperrzähnen hintereinander in Eingriff sind. Eine besonders gute Sperrwirkung wird mit radial angeordneten Sperrschiebern nämlich dann erreicht, wenn die steile Vorderflanke des hintergriffenen Sperrzahns unter Bildung eines Flächendrucks vollständig und vollflächig an der Sperrschieberseitenwand anliegt. Verläuft der Sperrschieber nicht genau radial zum Sperrad, liegt die steile Zahnvorderflanke an der Sperrschieberstirnseite an, wodurch der Sperrschieber die steile Zahnflanke punktlastartig beaufschlagt. Diese punktartige Beaufschlagung kann zur allmählichen Abplattung der steilen Zahnflanke und im schlimmsten Fall zum Zahnflankenausbruch führen.

Ferner ist mit zwei parallellaufenden Sperrschiebern nur ein kleiner Zahneinschnittwinkel zwischen steiler Zahnvorderflanke und ausgerundeter Rückzahnflanke realisierbar, wenn das beschriebene Risiko einer punktförmigen Beaufschlagung durch die Sperrschieberstirnseite vermieden werden soll **(siehe** **Richter-v.Voss, aaO).**

Sollen mehrere Sperrschieber zur Aufnahme extrem hoher Zurrkräfte angebracht werden, ist es prinzipiell vorteilhaft, diese an mehreren über den Sperradumfang verteilten Stellen in die Sperradverzahnung eingreifen zu lassen. Die Zurrkraft ist auf diese Weise besser auf die einzelnen Sperrschieber verteilt. Mit den in einer gemeinsamen Führung gelagerten Sprrschiebern ist jedoch nur ein Eingriff der Sperrschieber an einer Stelle der Verzahnung möglich.

Der Erfindung liegt daher die Aufgabe zugrunde, die gattungsmäßige Vorrichtung unter Vermeidung der obengenannten Nachteile so zu verbessern, daß sie eine geringe Bauhöhe aufweist.

Diese Aufgabe ist durch die Merkmalskombination des Anspruchs 1 vorteilhaft gelöst.

Die Erfindung bedient sich hierfür eines handelsüblichen genormten Sperrades als Sperrstück. Als Sperrer dienen mindestens zwei Sperrschieber. Einer der beiden Sperrschieber ist gemäß dem Stand der Technik radial und translatorisch verfahrbar zum Sperrad angeordnet. Der zweite Sperrschieber ist in erfinderischer Weise gekrümmt ausgeführt. Der gekrümmt ausgeführte Sperrschieber weist mit seiner Konkavseite zum nichtgekrümmten Sperrschieber gemäß dem Stand der Technik. Verfährt der gekrümmte Sperrschieber aus seiner Eingriffsstellung in seine Außereingriffsstellung, geschieht dies mittels einer Bewegung, die ihrerseits sowohl aus einer rotatorischen Bewegungskomponente als auch einer translatorischen Bewegungskomponente besteht.

Der erfinderisch gekrümmte Sperrschieber schwenkt also aus seiner Eingriffsstellung in seine Außereingriffsstellung aus der Verzahnung aus. Aufgrund der rotatorischen Bewegungskomponente schwenkt die dem Sperrad abgewandte Stirnseite des gekrümmten Sperrschiebers, welche gleichzeitig die Anlagefläche des Sperrschiebers mit einem Federelement bildet, in Richtung auf den zweiten, nichtgekrümmten Sperrschieber. Mit anderen Worten, während sich radial am Umfang verteilte Sperrschieber translatorisch in verschiedene Richtungen bewegen würden, schwenkt der erfindungsmäßig gekrümmte Schieber auf den zweiten nichtgekrümmten Schieber in der Vorrichtung zu. Während zwei nicht nicht parallele Sperrschieber nach dem Stand der Technik sich stets mehr oder weniger diagonal zur Längsrichtung der Vorrichtung translatorisch bewegen, vollzieht der erfindungsmäßig gekrümmte Schieber eine Schwenkbewegung im wesentlichen in Längsrichtung der Vorrichtung. Dadurch ist die Bauhöhe der Vorrichtung vorteilhaft verringerbar.

Diese geringe Bauhöhe der Vorrichtung hat zum einen den Vorteil, daß die Vorrichtung beim Transportieren und Lagern von Gütern wenig Transportraum oder Lagerraum beansprucht. Ferner steht die erfindungsmäßige Vorrichtung nur sehr gering aus dem Zurrstrang hervor, so daß das Risiko an die Vorrichtung anzustoßen und sich an ihr zu verletzen, gesenkt ist. Zudem fügt sich die flachbauende Vorrichtung harmonisch in den textilen Zurrstrang ein.

Wenn im Zusammenhang mit der Erfindung von Zurrsträngen die Rede ist, so können diese als textile Hebemittel, textile Zurrgurte, Ketten, Stahltrossen, Seile, o.ä. ausgeführt sein. Die Vorrichtung eignet sich folglich für jede Art von Spann- und Zurrmitteln.

Die Gestaltung der Grundkonsole und der Sperrschieberführungen nach den Ansprüchen 2 bis 5 bewirkt eine vorteilhafte Verminderung des Eigengewichts der Vorrichtung. Zudem bilden die Sperrschieber und die Sperrführungsschlitze Prismenschubführungen, die ein Verkanten der Schieber in den Schlitzen wirksam verhindern. Die Schieber liegen dadurch dauherhaft und fest in den Schlitzen geführt ein. Es ist zudem fertigungstechnisch vorteilhaft, daß nur wenige, formschlüssig zusammenwirkende Baugruppen benötigt werden. Die einfache Art der Konstruktion ermöglicht zudem den Einsatz niedrig ausgebildeter und damit lohngünstiger Arbeitskräfte beim Zusammenbau der Vorrichtung.

Die ringsegmentförmige Krümmung des Sperrschiebers nach Anspruch 5 ist eine besonders vorteilhafte Weiterbildung der Erfindung. Der so ausgestaltete Sperrschieber bewegt sich auf einer Kreisbahn aus der Eingriffsstellung in die Außereingriffsstellung. Die Krümmung ist hier einerseits nicht zu scharf, was die Gefahr des Verkantens erhöhen würde, andererseits scharf genug, um durch eine ausreichend große rotatorische Bewegungskomponente eine besonders vorteilhaft niedrige Bauhöhe der Vorrichtung zu gewährleisten. Zudem verbessert die ringsegmentförmige Krümmung des Sperrschiebers die mögliche Kraftübertragung. Aufgrund der ringsegmentförmigen, dem Sperrschieber angepaßten Gestaltung des Sperrführungsschlitzes wird das vorteilhafte Zusammenwirken von Schieber und Schlitz nach Art einer Prismenschubführung begünstigt.

Die Ansprüche 6 und 7 betreffen die vorteilhafte Anordnung der Sperrschieber in Bezug auf die Verzahnung des Sperrades. Diese Anordnung betrifft Ausführungsformen der Vorrichtung mit mehreren Sperrschieber zur Verkleinerung der Sperrsprünge. Insbesondere sind durch diese Anordnung von der Zahnteilung der Verzahnung unabhängige Sperrsprunggrößen realisierbar.

Die Ansprüche 8 und 9 beinhalten die Weiterbildung des Gesperres. Das Gesperre hat hiernach nicht nur die Funktion einer Rückdrehsperre sondern auch die eines Antriebsteils für die Spannwelle. Der am Schwenkarm angebrachte Antriebsschieber und das Sperrad bilden ein zwischen dem Schwenkarm und der Spannwelle wirksames Antriebsgetriebe. Der Aufbau dieses Getriebes ist konstruktiv einfach. Zudem hat das Sperrad noch eine Zweitfunktion als Antriebszahnrad für die Spannwelle.

Nach Anspruch 10 ist die Erfindung vorteilhaft, die Erfindung durch die Verwendung eines Zahnrichtgesperre weiterzubilden.

Die Ansprüche 11 bis 13 betreffen vorteilhafte Aus- und Weiterbildungen der die Sperrschieber beaufschlagenden Federelemente. Die Widerlagerung der Sperrschieber an Federelementen erhöht die Bedienungsfreundlichkeit und die Bedienungssicherheit der Vorrichtung. Die Nutzung eines gemeinsamen Federelements für beide Sperrschieber ist materialsparend. Zudem vereinfacht die konsequente Verwendung weniger Teile den konstruktiven Aufbau der Vorrichtung. Dies vereinfacht die Herstellung und senkt die Materail- und Produktionskosten. Durch die Verwendung einer in Querrichtung liegend angeordneten Schenkelfeder wird dem Gedanken der Haupterfindung folgend, der Platzbedarf für das Federelement verringert. Auch dies begünstigt die Verminderung der Bauhöhe der Gesamtvorrichtung.

Nach den Ansprüchen 14 und 15 ist die Schenkelfeder an einem vom Grundkörper abstehenden, in den Raum zwischen den beiden Sperrschiebern hineinragenden Haltebügel anbringbar und je nach dem zur Verfügung stehenden Einbauraum zwischen den Sperrschiebern variabel fixierbar. Auf diese Weise läßt sich der Raumbedarf nochmals reduzieren. Der Einsatz einer derartigen Schenkelfeder ist dadurch begünstigt, daß sich die Sperrschieber mit ihren Anlageflächen an der Schenkelfeder beim Verfahren in die Außereingriffsstellung aufeinander zubewegen. Besonders vorteilhaft ist das Zusammenwirken einer derartigen Schenkelfeder mit zwei gekrümmten, mit ihren Konkavseiten einander zugewandten Sperrschiebern gemäß Anspruch 16. Die Bewegung der Sperrschieber aufeinander zu ist hier besonders intensiv. Zudem ist der Platzspareffekt nur eines gekrümmten Sperrschiebers gleichsam dupliziert. Der Einbau der Schenkelfeder zwischen den Konkavseiten der Sperrschieber gemäß Anspruch 17 verringert zusätzlich den für das Federelement notwendigen Einbauraum und verringert dadurch zusätzlich in vorteilhafter Weise die Bauhöhe der Vorrichtung.

Die gleichfalls gekrümmte Ausführung des Antriebsschiebers nach Anspruch 18 trägt zusätzlich zur Verringerung der Bauhöhe der Vorrichtung bei. Zudem kann das gleiche Bauteil für den Antriebsschieber und einen der Sperrschieber verwendet werden. Die Verwendung dieser Form des Antriebsschiebers führt neben der fertigungstechnischen Vereinfachung zu einem mechanisch erleichterten Übergleiten des Antriebsschiebers über die gekrümmten Zahnrückflanken. Beim Drehen gegen die Spannrichtung liegt der mit den Zahnrückflanken in Berühung kommende Flächenbereich des Spannschiebers formbündig an den Rückflanken an. Dies gilt ebenso für jeden gekrümmten Sperrschieber. Ruht der Antriebsschieber in der Ruhenut oder in der Rastnut an der Grundkonsole, sind diese Nuten so auszuformen, daß der Antriebsschieber formschlüssig einliegt.

Die Erfindung wird anhand der in den Zeichnungen dargestellten Ausführungsbeispiele mit weiteren, erfindungswesentlichen Merkmalen geschildert. Es zeigen:

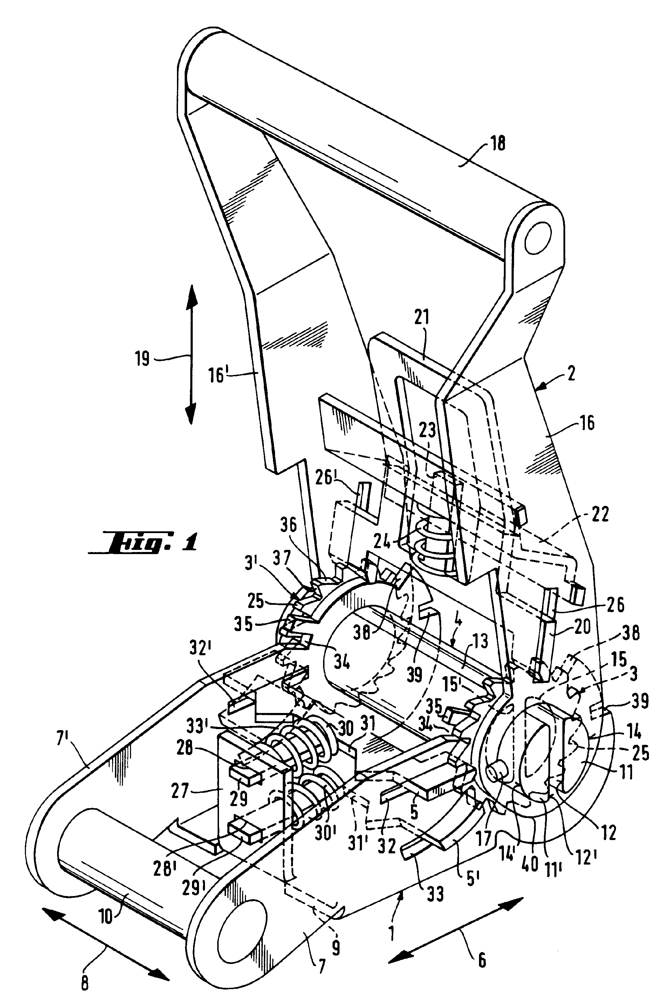

- Fig. 1: eine perspektivische Gesamtdarstellung der erfindungsmäßigen Spann- und Zurrvorrichtung,
- Fig. 2: die Prinzipskizze einer Seitenansicht der Vorrichtung gemäß Fig. 1 in Ruhestellung,
- Fig. 3: eine Prinzipskizze der Vorrichtung gemäß Fig. 2 mit zwei gekrümmten Sperrschiebern und einem Federelement,
- Fig. 4: eine Prinzipskizze der Vorrichtung gemäß Fig. 3 mit zusätzlich einem ebenfalls gekrümmten Antriebsschieber.
- Fig. 5: eine schematische Prinzipskizze mit einer vergleichenden Betrachtung der Kinematik eines gekrümmten Sperrschiebers zur Kinematik eines ungekrümmten Sperrschiebers.

Die erfindungsmäßige Spann- und Zurrvorrichtung besteht im wesentlichen aus einer Grundkonsole 1, einem als Spannhebel wirksamen Schwenkarm 2 und einer Sperräder 3,3′ durchsetzenden Spannwelle 4 sowie einem Gesperre. Das Gesperre besteht seinerseits aus zwei Sperrädern 3,3′ als Sperrstücken und zwei Sperrschiebern 5,5′ als Sperrern und dient zur Verhinderung der Rückdrehung der Spannwelle 4.

Die Konsole 1 weist zwei in Längsrichtung 6 verlaufende Konsolenseitenwände 7,7′ auf. Die Konsole 1 besitzt in ihrer Mitte einen in Querrichtung 8 U-förmigen Querschnitt.
Die U-Schenkel des Querschnitts bilden hierbei die Konsolenseitenwände 7,7′ und das die U-Schenkel verbindende U-Querjoch bildet den Konsolenboden 9. Die den Konsolenboden 9 in Längsrichtung 6 überragenden Konsolenseitenwände 7,7′ sind an ihren Freienden jeweils gabelförmig ausgestaltet. Das dem von der Spannwelle 4 durchsetzten Funktionsfreiende abgewandte Fixierfreiende der Konsole 1 ist in Querrichtung 8 von einem Querbolzen 10 durchsetzt. Dieses Fixierfreiende dient zur lösbaren Befestigung des Festendes eines in den Zeichnungen nicht dargestellten Zurrstrangs.

Die Spannwelle 4 besteht aus zwei das Funktionsfreiende der Konsole 1 durchsetzenden Halbbolzen 11,11′. Diese weisen jeweils einen in Längsrichtung 6 verlaufenden halbkreisförmigen Querschnitt auf. Die Halbbolzen 11,11′ sind mit ihren einander zugewandten Planseiten 12,12′ in einem in Längsrichtung 6 verlaufenden geringen Abstand angeordnet. Dieser Abstand dient zur Bildung eines in Querrichtung 8 verlaufenden Einführungsschlitzes 13 für den Zurrstrang. Die einander abgewandten Rundseiten 14,14′ der Halbbolzen bilden die Aufwickelfläche des zu spannenden Zurrstrangs.

Die Halbbolzen 11,11′ durchsetzen außerdem die Sperräder 3,3′ sowie das der Konsole 1 zugewandte Freiende des Schwenkarms 2. Die Sperräder 3,3′ weisen in ihrem Kern Aussparungen 15,15′ auf, die in ihren Abständen, ihrer Anordnung und ihren Abmessungen in etwa denjenigen der in Längsrichtung 6 verlaufenden Querschnitte der Halbbolzen 11,11′ entsprechen, so daß die Halbbolzen 11,11′ die Sperräder 3,3′ nach Art einer Lospassung durchsetzen. Die Sperräder 3,3′ sind an ihren Seitenwänden von den Außenwänden der Konsolenseitenwände 7,7′ sowie von den Innenseiten der Schwenkarmseitenwände 16,16′ flankiert. Um ein seitliches Verrutschen der von der Spannwelle 4 durchsetzten Freienden der Konsole 1, des Schwenkarms 2 sowie der Sperräder 3,3′ zu verhindern, sind die beiden Halbbolzen 14,14′ an ihren Enden in Querrichtung 8 jeweils von einem Sicherungsbolzen 17 durchsetzt.

Die Schwenkarmseitenwände 16,16′ sind an ihrem der Spannwelle 4 abgewandten Seite in Querrichtung 8 durch einen Handgriff 18 verbunden. Unterhalb des Handgriffs 18 befindet sich in Griffrichtung 19 ein am Antriebsschieber 20 angeformter Entriegelungsbügel 21. Durch Betätigen des Entriegelungsbügels 21 läßt sich der Antriebsschieber 20 in Griffrichtung 19 bewegen. Zwischen den Schwenkarmseitenwänden 16,16′ ist in Querrichtung 8 ein Querverbindungsjoch 22 angebracht, welches einen in Querrichtung 8 verlaufenden Führungsschlitz zur Führung des Greifbügels 21 aufweist. An der der Spannwelle 4 abgewandten Stirnseite des Antriebsschiebers 20 ist ein das Querverbindungsjoch 22 in Griffrichtung 19 durchsetzender Zentrierdorn 23 angeformt. Der Zentrierdorn 23 ist in Griffrichtung 19 von einem wendelförmigen Federelement, einer Spiralfeder 24, ummantelt. Der ummantelte Bereich des Zentrierdorns 23 in Griffrichtung 19 ist dabei von dem als Widerlager dienenden Querverbindungsjoch 22 und der der Spannwelle 4 abgewandten Stirnseite des Antriebsschiebers 20 begrenzt. Die Druckkraft der Spiralfeder 24 bewegt den Antriebsschieber 20 auf die Zähne 25 der Verzahnung der Sperräder 3,3′ zu. Zum Lösen des Antriebsschiebers 20 aus der Verzahnung ist der Greifbügel 21 in Griffrichtung 19 verfahrbar. Während dieser Bewegung ist der Antriebsschieber 20 mit seinen Seitenwänden in plan ausgestalteten, sich in den Schwenkarmseitenwänden 16,16′ befindlichen Spannführungsschlitzen 26,26′ geführt.

Am Konsolenboden 9 ist in der Mitte in Querrichtung 8 gesehen ein Führungsteil 27 angeformt, welches sich im wesentlichen in Griffrichtung 19 aus dem Konsolenboden 9 erhebt. In dem Führungsteil 27 befinden sich Lageröffnungen 28,28' zur Führung der Führungsdorne 29,29', welche an den der Spannwelle abgewandten Stirnseiten der Sperrschieber 5,5′ angeformt sind. Die Führungsdorne 29,29' werden über einen Teilbreich in ihrer Längsrichtung von Spiralfederelementen 30,30′ ummantelt. Dieser Teilbereich liegt zwischen der der Spannwelle 4 zugewandten Seitenfläche des Führungsteils 27 und den sich an die Führungsdorne 29,29' anschließenden Stirnflächen der Sperrschieber 5,5′. Die an den Spiralfederelementen 30,30′ anliegenden Stirnseiten der Sperrschieber 5,5′ bilden die Anlageflächen 31,31′.

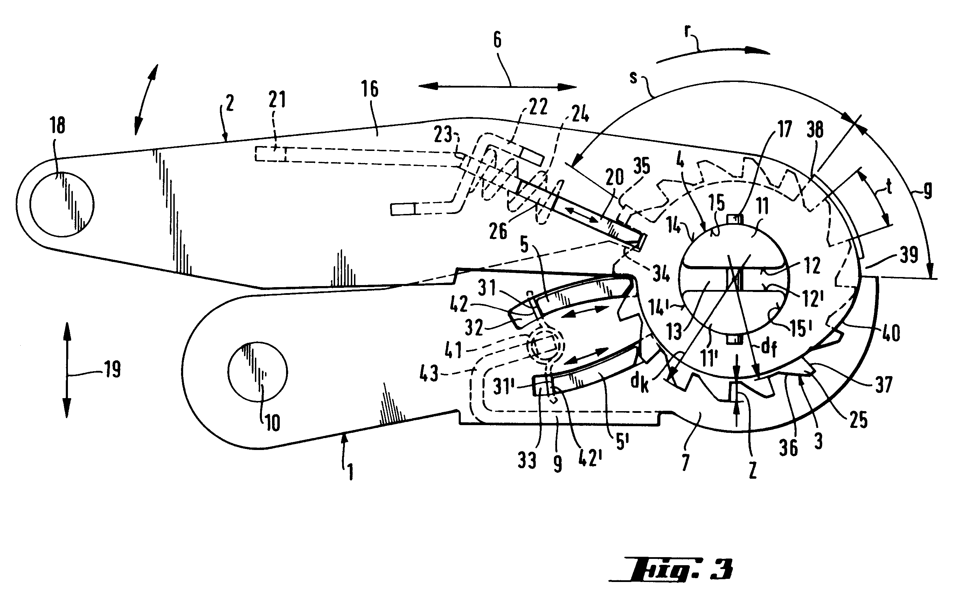

Die Sperrschieber 5,5′ liegen nach Art von Schenkeln eines spitzen Winkels zueinander, dessen Scheitel durch die Rotationsachse der Spannwelle 4 gebildet ist, wobei der Sperrschieber 5′ gekrümmtausgeführt ist. Die verlängerten Ebenen der Schieberseitenflächen schneiden sich also in der Rotationsachse der Spannwelle 4. Die Druckkraft der Spiralfederelemente 30,30′ bewegt die Sperrschieber 5,5′ auf die Zähne 25 der Verzahnung der Sperräder 3,3′ zu. Die Sperrschieber 5,5′ sind in Sperrführungsschlitzen 32,32′,33,33′ nach Art von Planführungen geführt. Die Sperrführungsschlitze 32,32′,33,33′ sind ihrerseits in die Konsolenseitenwände 7,7′ eingeformt. Der Abstand der Sperrschieber 5,5′ beträgt hierbei das Eineinhalbfache der Zahnteilung t (in Fig. 3 dargestellt).

Der gekrümmte Sperrschieber 5′ ist in seiner in Längsrichtung 6 verlaufenden Querschnittsform ringsegmentförmig ausgestaltet, wobei seine Konkavseite dem ebenen Sperrschieber 5 zugewandt ist. An diese ringsegmentartige Form des gekrümmten Sperrschiebers 5′ sind die sich in den Konsolenseitenwänden 7,7′ befindlichen Sperrführungsschlitze 33,33′ in ihrer Form angepaßt. Der gekrümmte Sperrschieber 5′ bildet mit den Sperrführungsschlitzen 33,33′ eine Flächenführung.

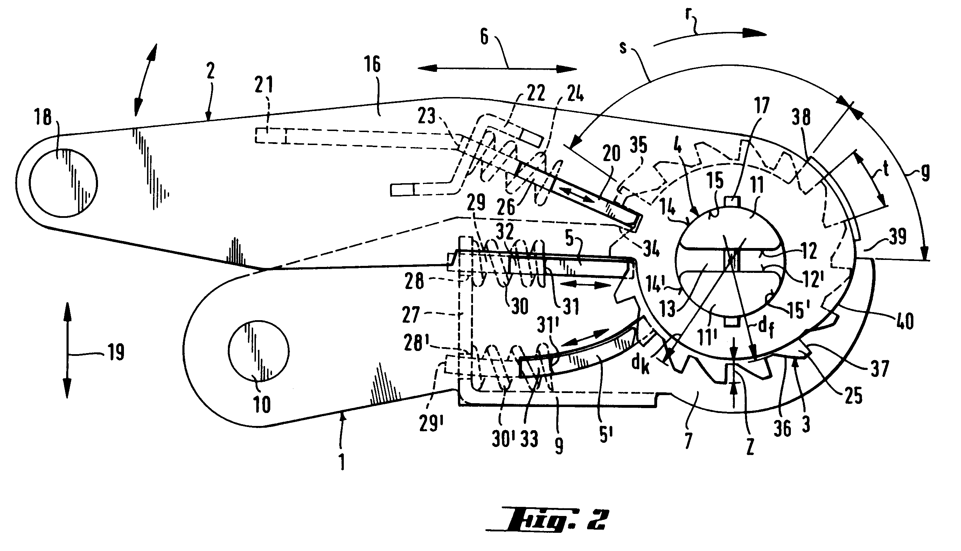

In Fig. 2 ist die in Längsrichtung 6 verlaufende Seitenansicht der Vorrichtung dargestellt. Dabei befindet sich die Vorrichtung in ihrer Ruheposition. Die Konsole 1 und der Schwenkarm 2 befinden sich in einem 0°-Winkel zueinander. In der Ruheposition liegt der Antriebsschieber 20 mit seiner der Spannwelle 4 zugewandten Stirnseite und den sich daran anschließenden Seitenflächen in einer Ruhenut 34 bündig an. Die Seitenfläche der die Ruhenut 34 auf der einen Seite begrenzenden Führungsnase 35 und die Schmalseite der die Ruhenut 34 auf der gegenüberliegenden Seite begrenzenden Konsolenseitenwand 7,7′ sind einander zugewandt und flankieren die Seitenflächen des Antriebsschiebers 20.

Zum Antrieb des Schwenkarms 2 in Spannrichtung r muß der Antriebsschieber in eine sich im Spannbereich s befindliche Position gebracht werden. Durch Betätigen des Greifbügels 21 in Griffrichtung 19 ist der Antriebsschieber 20 aus der Ruhenut herausbewegbar. Zum Verfahren des Schwenkarms 2 in Spannrichtung r in den Spannbereich s muß der Antriebsschieber 20 über die Führungsnase 35 hinwegbewegt werden. Bei Loslassen des Greifbügels 21 befindet sich der Antriebsschieber 20 im Spannbereich s, wobei der Spannbereich seinen Öffnungswinkel von etwa 30° bis 130° aufweist. Im Spannbereich s weist die Konsolenseitenwand 7,7′ in ihrer Längsrichtung 6 einen kreissegmentartigen Querschnitt auf, dessen Kreisdurchmesser dem Fußkreisdurchmesser d_{f} der Verzahnung auf den Sperrädern 3,3′ entspricht. Bei Betrieb des Schwenkarms 2 in Spannrichtung r liegt der Antriebsschieber 20 deshalb immer mit seiner dem Sperrad 3,3′ zugewandten Stirnseite auf der abgerundeten Rückflanke 36 der Sperrzähne 25 auf und hintergreift mit seiner in Spannrichtung r weisenden Seitenfläche formschlüssig den in Spannrichtung r benachbarten Zahn 25 an seiner steilen Vorderflanke 37.

Beim Antrieb in Sperrichtung r greifen die Sperrschieber 5,5′ durch ihren dem eineinhalbfachen Betrag einer Zahnteilung t entsprechenden Abstand abwechselnd in die Verzahnung des Sperrades 3,3′ ein. Die Formgestaltung des Rastbereichs der Sperrschieber 5,5′ ist der Oberflächenform der Verzahnung des Sperrades 3,3′ angepaßt. Der Rastbereich besteht aus den dem Sperrad 3,3′ zugewandten Schieberstirnseiten und den sich daran anschließenden Schieberseitenflächen. Die durch die Druckkraft der Spiralfederelemente 30,30′ bewegten Sperrschieber 5,5′ greifen formschlüssig in die Verzahnung ein. Beim Eingriff in die Verzahnung tangieren die abgerundete Rückflanke 36 und die steile Vorderflanke 37 zweier benachbarter Zähne 25 die Wirkfläche des Rastbereichs des jeweiligen Sperrschiebers 5,5′.

Für den Sperrschieber 5′ wird eine ringsegmentartig ausgestaltete Querschnittsform verwendet, da sie eine geringere Bauhöhe der gesamten Vorrichtung bewirkt. Zudem wird die Kraftübertragung in Spannrichtung r beim Hintergreifen der Verzahnung durch die Wirkfläche des gekrümmten Sperrschiebers 5′ verbessert. Die Sperrführungsschlitze 32,32′ und 33,33′ sind als Prismenschubführungen in den Konsolenseitenwänden 7,7′ ausgestaltet eingeformt und in ihrer planen Form den sowohl den Seitenflächen der Sperrschieber 5,5′ angepaßt als auch der Bewegungsrichtung der Sperrschieber 5,5′ angepaßt. Die rotatorische Bewegungskomponente des gekrümmten Sperrschiebers 5′ entsteht also durch die ringsegmentförmige Gestaltung des Sperrschiebers 5′ und der daran angepaßten Gestaltung der Sperrführungsschlitze 33,33′.

Beim Drehen des Schwenkarms 2 gegen die Drehrichtung r hintergreift einer der Sperrschieber 5,5′ mit seiner Wirkfläche die Verzahnungen der Sperräder 3,3′, so daß der Zurrstrang gespannt bleibt.

In einer 140°-Position liegt der Antriebsschieber 20 mit seiner einen Seitenfläche am Spannanschlag 38 an. Um die Vorrichtung in die Lösestellung zu bringen, muß der Antriebsschieber 20 den Gleitbereich g überwinden und in die Rastnut 39 einrasten. Der Gleitbereich g weist einen Öffnungswinkelbereich von etwa 130° bis etwa 175° auf. In diesem Bereich weist die Konsolenseitenwand 7,7′ in ihrer Längsrichtung 6 einen kreisförmigen Querschnitt auf, dessen Durchmesser gegenüber dem Kopfkreisdurchmesser dₖ der Verzahnung des Sperrades 3,3′ erhöht ausgeführt ist (dargestellt in Fig. 3). Beim Betätigen des Entriegelungsbügels 21 in Griffrichtung 19 und darauf folgendem Drehen des Schwenkarms 2 in Drehrichtung r liegt die der Spannwelle 4 zugewandte Stirnseite des Antriebsschiebers 20 auf den ihr zugewandten Stirnseiten der Konsolenseitenwände 7,7′ auf. Der Antriebsschieber 20 ist dadurch in Außereingriffstellung mit der Verzahnung der Sperräder 3,3′ verfahren und gleitet in Drehrichtung in seine Lösestellung weiter.

In Lösestellung weisen der Schwenkarm 2 und die Konsole 1 der Spann- und Zurrvorrichtung etwa einen Winkel von 180° auf. Der Antriebsschieber 20 rastet dabei mit seiner der Spannwelle 4 zugewandten Stirnseite und den daran angrenzenden Seitenflächen in die Rastnut 39 formschlüssig ein. Diese Lösestellung kann nur durch erneutes Betätigen des Entriegelungsbügels 21 in Griffrichtung 19 verändert werden, so daß ein mögliches Verletzungs- und Sicherheitsrisiko durch die Spann- und Zurrvorrichtung stark reduziert ist. In dieser Lösestellung der Vorrichtung bringt eine an den von der Spannwelle 4 durchsetzten Freienden des Schenkarms 2 angeformte Steuerkurve 40 die Sperrschieber 5,5′ in eine Außereingriffsstellung mit der Verzahnung der Sperräder 3,3′ derart, daß sich das Gesperre in seiner Lösestellung befindet und das Freiende des Zurrstranges abgewickelt und aus der Spannwelle 4 herausgezogen werden kann.

In Fig. 3 ist eine gegenüber der Ausführungsform in Fig. 2 erfindungsmäßig weitergebildete Ausführungsform der Spann- und Zurrvorrichtung dargestellt. Bei dieser Ausführungsform weisen beide Sperrschieber 5,5′ eine gekrümmte, in Längsrichtung 6 ringsegmentartige Querschnittsform auf. Dementsprechend sind nun auch beide Paare der Sperrführungsschlitze 32,32′,33,33′ in ihrer Form den Seitenflächen der gekrümmten Sperrschiebers 5,5′ und der Bewegungsrichtung der gekrümmten Sperrschieber 5,5′ angepaßt. Die Verwendung beider gekrümmter Sperrschieber 5,5′ ermöglicht eine weitere Reduzierung der Bauhöhe der Vorrichtung. Zudem wird der Vorteil der wirksameren Kraftübertragung in Drehrichtung, bedingt durch die leicht rotatorische Bewegung der Sperrschieber 5,5′, nochmals erhöht.

Weiterhin platzsparend und zudem auch Bauteile sparend sind die Sperrschieber 5,5′ an einem einzigen, gemeinsamen Federelement widergelagert. Dieses Federelement ist eine Schenkelfeder 41. Die Schenkelfeder weist zwei einander gegenüberliegend angeordnete Federschenkel 42,42′ auf. Die Schenkel 42,42′ beaufschlagen die Sperrschieber 5,5′ an ihren Anlageflächen 31,31′ in Richtung auf die Sperräder 3,3′ mit dem Federdruck der Schenkelfeder 41.

Ein aus dem Konsolenboden senkrecht zur Längsrichtung 6 und Querrichtung 8 herausragender Haltebügel fixiert die Schenkelfeder 41 in Querrichtung 8. Der abgewinkelte Haltebügel ragt hierbei mit seinem Freiende in den Zwischenraum zwischen den einander zugewandten Konkavseiten der Sperrschieber 5,5′ hinein. Dabei ist die Schenkelfeder 41 je nach Raumangebot zwischen den Sperrschiebern 5,5′ am Freiende des Haltebügels 43 variabel fixierbar. Das Aufeinanderzubewegen der Anlageflächen 31,31′ der Sperrschieber 5,5′ aufgrund ihrer gekrümmten Form erleichtert den Einsatz eines einzigen Federelements. Das Aufeinanderzubewegen der Rastbereiche der Sperrschieber 5,5′ aufgrund der gekrümmten Form ermöglicht die Verwendung eines kleinen Zahnteilungswinkels. Außerdem bewirkt die gekrümmte Form der Sperrschieber 5,5′ eine platzsparende rotatorische Bewegung.

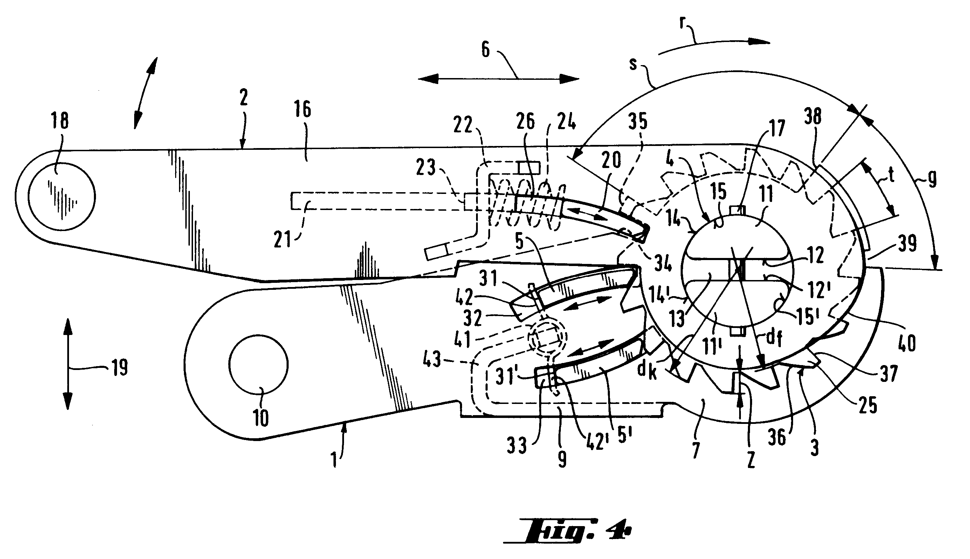

In Fig. 4 ist eine weiter verbesserte Ausführungsform der Vorrichtung dargestellt. Diese Vorrichtung weist zusätzlich einen ebenfalls gekrümmten Antriebsschieber 20 auf. Dieser gekrümmte Antriebsschieber 20 reduziert zusätzlich die Bauhöhe der gesamten Vorrichtung. Fertigungstechnisch günstig, weil bauteilsparend, ist die Tatsache, daß die gleichen Schieber sowohl als Sperrschieber 5,5′ als auch als Antriebsschieber 20 verwendbar sind.

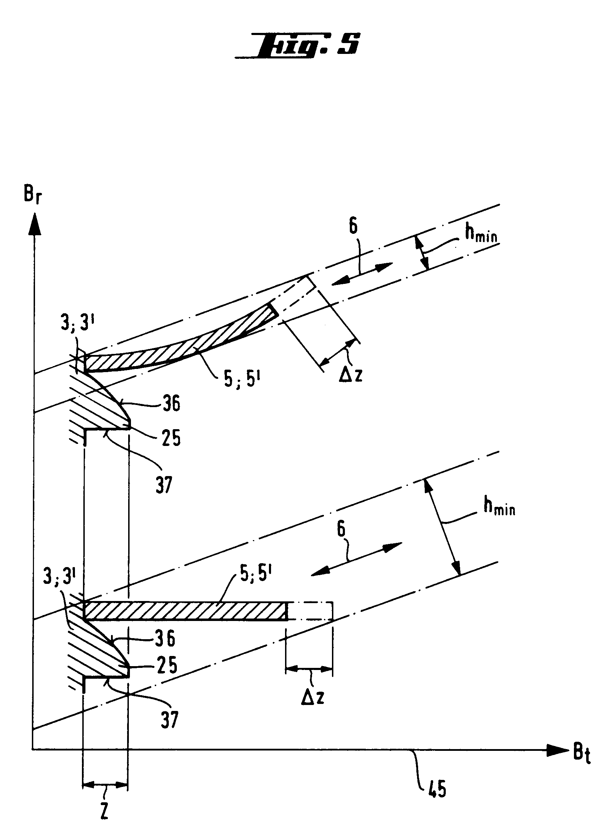

Anhand der in Fig. 5 dargestellten Prinzipskizze sei die Auswirkung der erfindungsmäßig gekrümmten Schieber 5′ auf die Bauhöhe der Vorrichtung nochmals erläutert. Eine Einheit auf der in Fig. 5 dargestellten Maßachse 45 entspricht der Zahnhöhe Z, gemessen an der steilen Vorderflanke 37. Die Zahnhöhe Z ist durch die Differenz des Kopfkreisdurchmessers dₖ zum Fußkreisdurchmesser d_{f} definiert. Sowohl der gerade Sperrschieber 5 als auch der gekrümmte Sperrschieber 5′ müssen mindestens um den Betrag dieser Zahnhöhe Z aus ihrer Eingriffsstellung in ihre Außereingriffstellung verfahren werden, um den Formschluß mit dem Sperrzahn 25 zu lösen. Diese minimal notwendige Verfahrstrecke der Sperrschieber 5,5′ ist in Fig. 5 mit Δz bezeichnet.

Wird der gerade Sperrschieber 5 um die Strecke Δz verfahren, so weist die Verfahrbewegung nur eine Bewegungskomponente in translatorischer Richtung Bₜ auf. Die Bewegung des gekrümmten Sperrschiebers 5′ dagegen enthält sowohl eine Bewegungskomponente in translatorischer Richtung Bₜ als auch eine Bewegungskomponente in Rotationsrichtung Bᵣ. Aufgrund der radialen Anordnung der Sperrschieber 5,5′ in bezug auf das Sperrad 3,3′ muß bei einer Vorrichtung mit mehreren Sperrschiebern mindestens ein Sperrschieber- wie in Fig. 5 dargestellt- diagonal zur Längsrichtung 6 der Vorrichtung verlaufen. Der zugehörige Sperrführungsschlitz 32,32′, 33,33′ muß deshalb folgende Minimallänge aufweisen: Länge des Sperrschiebers 5,5′ + Δz.

Da weder die rotatorische Bewegungskomponente Bᵣ noch die translatorische Bewegungskomponente Bₜ in Längsrichtung 6 verläuft, muß die Konsolenseitenwand 7,7′ zur Aufnahme der Sperrführungsschlitze 32,32′,33,33′ die von der Längsrichtung 6 abweichende minimale Bauhöhe hₘᵢₙ aufweisen.

Aus der Anschauung der Fig. 5 wird klar, daß sich dergerade Sperrschieber 5 beim Verfahren aus der Eingriffsstellung in die Außereingriffsstellung gewissermaßen immer mehr von der Längsrichtung 6 entfernt, die minimale Bauhöhe hₘᵢₙ also mit steigendem Δz immer weiter ansteigt. Demgegenüber mildert die rotatorische Bewegungskomponente Bᵣ diese Tendenz der steigenden minimalen Bauhöhe hₘᵢₙ ab. Aufgrund der sowohl vorhandenen translatorischen Bewegungskomponente Bₜ als auch der vorhandenen rotatorischen Bewegungskomponente Bᵣ schmiegt sich die resultierende Bewegungsrichtung des gekrümmten Sperrschiebers 5′ der Längsrichtung 6 nahezu an. Die minimale Bauhöhe hₘᵢₙ ist beim gekrümmten Sperrschieber 5′ also deutlich kleiner als beim nicht gekrümmten Sperrschieber 5. Die resultierende Bewegungsrichtung beim gekrümmten Sperrschieber 5′ ist also durch die rotatorische Bewegungskomponente Bᵣ in die Längsrichtung 6 umgelenkt.

Die minimale Bauhöhe hₘᵢₙ ist bei einer Vorrichtung mit gekrümmten Sperrschiebern 5′ folglich aus der kritischen, sich in Griffrichtung 19 erstreckenden Bauhöhe in die unkritische, sich in Längsrichtung 6 erstreckende Baulänge verlagert. Je geringer der Betrag der minimalen Bauhöhe hₘᵢₙ ist, desto eher ist der Betrag der gesamten Vorrichtungsbauhöhe in Griffrichtung 19 reduzierbar. Die Reduzierbarkeit der Bauhöhe in Griffrichtung 19 wird also dadurch erreicht, daß die Sperrschieber 5 nicht mehr nur in translatorischer Bewegungsrichtung Bₜ verfahrbar sind, sondern als derart gekrümmt sind, daß sie in einer der Längsrichtung 6 angepaßten resultierenden Bewegungsrichtung aus- und einschwenkbar sind, wobei die resultierende Bewegungsrichtung ihrerseits aus einer translatorischen Bewegungskomponente Bₜ sowie einer rotatorischen Bewegungskomponente Bᵣ gebildet ist.

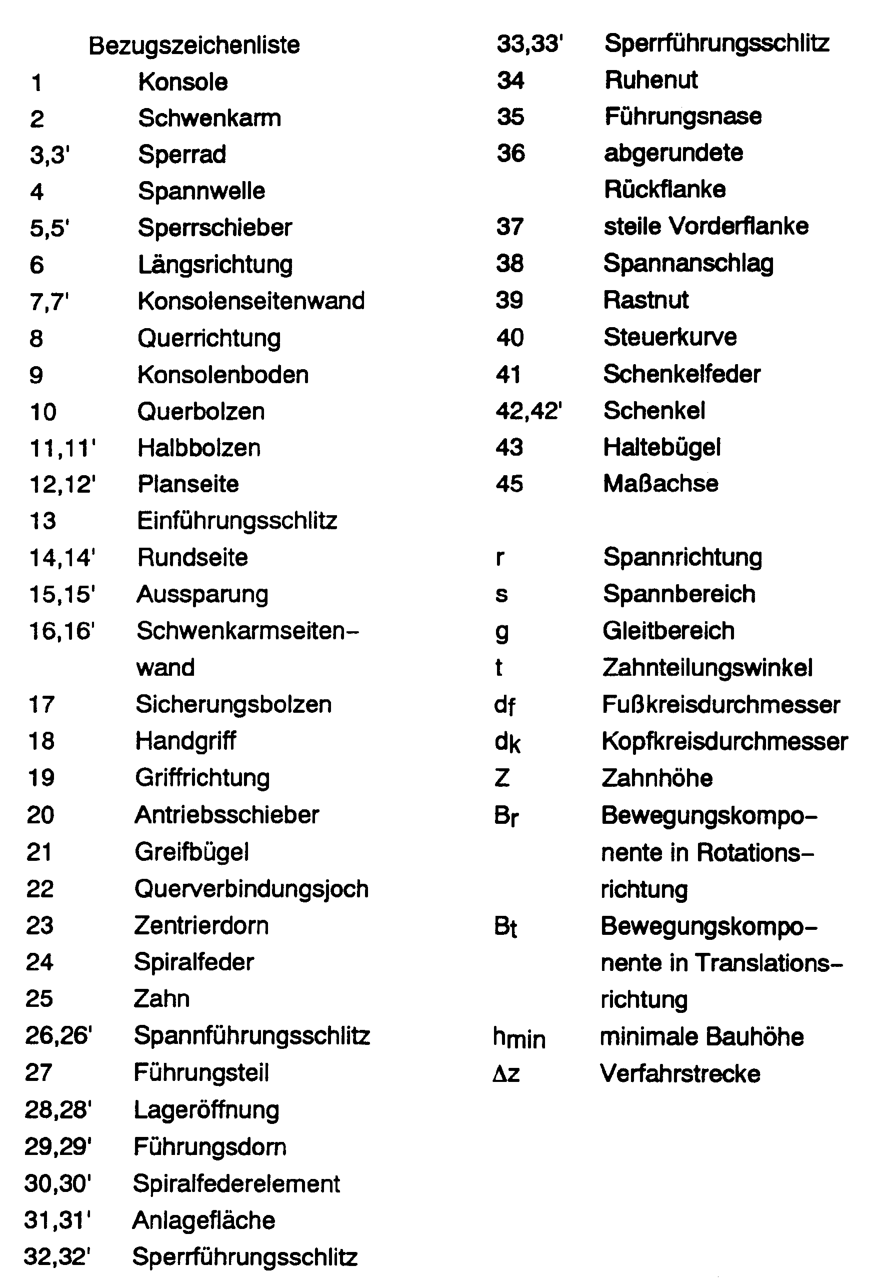

## Patentansprüche

1. Vorrichtung zum Spannen und Zurren von Zurrsträngen
- mit einer im Zurrstrang fixierbaren Grundkonsole (1),
- mit einer in der Konsole (1) drehbar gelagerten und drehantreibbaren Spannwelle (4) zur Aufnahme und zum Aufwickeln eines Zurrgurtfreiendes und
- mit einem zwischen der Konsole (1) und der Spannwelle (4) wirksamen Gesperre zur Sicherung der Spannwelle (4) gegen Rückdrehung bestehend
-- aus einem mit der Spannwelle (4) bewegungsmäßig verbundenen Sperrad (3,3′) mit einer Verzahnung als Sperrstück und
-- aus mindestens zwei an der Konsole (1) gelagerten Sperrschiebern (5,5′) als Sperrer, welche
--- in Richtung auf das Sperrad (3,3′) druckbeaufschlagt verschiebbar sind und
--- an verschiedenen Stellen mit der Verzahnung des Sperrads (3,3′) in Eingriff bringbar sind,
dadurch gekennzeichnet,
daß zur Reduzierung der Bauhöhe der Konsole (1) ein Sperrschieber (5′) gekrümmt ausgeführt ist.

2. Vorrichtung nach Anspruch 1,
dadurch gekennzeichnet,
- daß die Konsole (1) einen in Querrichtung (8) verlaufenden, im wesentlichen U-förmigen Querschitt aufweist, dessen U-Schenkel zwei sich in Längsrichtung (6) erstreckende, zueinander parallele Konsolenseitenwände 7,7′ bilden und
- daß die Konsolenseitenwände 7,7′ in Querrichtung (8) von Sperrführungsschiltzen (32,32′/33,33′) durchsetzt sind.

3. Vorrichtung nach Anspruch 1 und 2,
dadurch gekennzeichnet,
- daß die Sperrschieber (5,5′) in Querrichtung (8) verschiebegesichert und im wesentlichen längsverschiebbar in den Sperrführungsschlitzen (32,32′/33,33′) gelagert sind und
- daß die Sperrführungsschlitze (32,32′/33,33′) im wesentlichen in Längsrichtung (6) verlaufende Prismenschubführungen für die Sperrschieber (5,5′) bilden.

4. Vorrichtung nach einem oder mehreren der vorhergehenden Ansprüche,
dadurch gekennzeichnet,
daß der gekrümmte Sperrschieber (5′) in einem seiner Krümmung angepaßten, gekrümmten Sperrführungsschlitz (33,33′) in seiner Krümmungsrichtung verschiebbar und schwenkbar gelagert ist.

5. Vorrichtung nach einem oder mehreren der vorhergehenden Ansprüche,
dadurch gekennzeichnet,
daß ein ringsegmentförmig gekrümmter Sperrschieber (5′) in einem entsprechend ringsegmentförmig gekrümmten Sperrführungsschlitz (33,33′) gelagert einliegt.

6. Vorrichtung nach einem oder mehreren der vorhergehenden Ansprüche,
dadurch gekennzeichnet,
daß zwei Sperrschieber (5,5′) derart versetzt angeordnet sind, daß einer der Sperrschieber (5,5′) in Eingriffsstellung mit den vom Sperrad (3.3′) getragenen Sperrzähnen (25) ist, während der zweite Sperrschieber (5,5′) in Außereingriffsstellung mit den Sperrzähnen (25) ist.

7. Vorrichtung nach Anspruch 6,
dadurch gekennzeichnet,
daß der Abstand der Eingriffsstellung des ersten Sperrschiebers (5,5′) zur Eingriffsstellung des zweiten Sperrschiebers (5,5′) dem Betrag einer eineinhalbfachen Zahnteilung (t) der von den Sperrzähnen (25) gebildeten Verzahnung entspricht.

8. Vorrichtung nach einem oder mehreren der vorhergehenden Ansprüche
gekennzeichnet durch
durch einen an der Konsole (1) schwenkbar gelagerten Schwenkarm (2) zum Drehantrieb der Spannwelle (4), wobei die Spannwelle (4) den Lagerzapfen des Schwenklagers für den Schwenkarm (2) bildet.

9. Vorrichtung nach einem oder mehreren der vorhergehenden Ansprüche
gekennzeichnet durch
einen mit dem Sperrad in Eingriff bringbaren, am Schwenkarm verschieblich gelagerten Antriebsschieber (20) zur Krafteinleitung für den Drehantrieb der Spannwelle (4).

10. Vorrichtung nach einem oder mehreren der vorhergehenden Ansprüche
dadurch gekennzeichnet,
- daß das Gesperre ein Zahnrichtgesperre ist und
- daß der Antriebsschieber (20) und die Sperrschieber (5,5′) nach Art von Sperrklinken formschlüssig mit der Verzahnung des Sperrades (3,3′) verrastbar sind.

11. Vorrichtung nach einem oder mehreren der vorhergehenden Ansprüche,
dadurch gekennzeichnet,
daß die Sperrschieber (5,5′) in Richtung auf das Sperrad (3,3′) von einem Federelement (30,30′) druckbeaufschlagt in den Sperrführungsschlitzen (32,32′/33,33′) einliegen.

12. Vorrichtung insbesondere nach einem oder mehreren der vorhergehenden Ansprüche,
dadurch gekennzeichnet,
daß die beiden Sperrschieber (5,5′) mit ihren die Anlageflächen (31,31′) bildenden, dem Sperrad abgewandten Enden an einem gemeinsamen Federelement (41) anliegen.

13. Vorrichtung nach Anspruch 12,
dadurch gekennzeichnet,
daß das Federelement (41) eine in Querrichtung (8) liegende Schenkelfeder ist, an deren beiden gegenüberliegenden Schenkeln (42,42′) jeweils ein Sperrschieber (5,5′) mit seiner Anlagefläche (31,31′) anliegt.

14. Vorrichtung nach einem oder mehreren der vorhergehenden Ansprüche,
dadurch gekennzeichnet,
daß das Federelement (41) an einem in Richtung auf den Schwenkarm (2) abstehenden Haltebügel (43) an der Konsole (1) fixierbar ist.

15. Vorrichtung nach einem oder mehreren der vorhergehenden Ansprüche,
gekennzeichnet durch
zwei gekrümmte Sperrschieber (5,5′) derart, daß sie mit ihren einander zugewandten Konkavseiten in entsprechend gekrümmten Sperrführungsschlitzen (32,32′/33,33′) gelagert einliegen und ihre Konvexseiten einander abgewandt sind.

16. Vorrichtung nach Anspruch 18,
gekennzeichnet durch
eine ringsegmentartige Form beider Sperrschieber (5,5′) derart, daß die in das Sperrad (3.3′) eingreifenden Bereiche und die Anlageflächen (31,31′) beim Verschieben der Sperrschieber (5,5′) in den ringsegmentförmigen Sperrführungsschlitzen (32,32′/33,33′) nach Art von Sperrklinken aufeinander zubewegbar sind.

17. Vorrichtung nach einem oder mehreren der vorhergehenden Ansprüche,
dadurch gekennzeichnet,
daß die querliegende Federwendel der Schenkelfeder (41) zwischen den Konkavseiten der Sperrschieber (5,5′) eingebettet fixierbar ist.

18. Vorrichtung nach einem oder mehreren der vorhergehenden Ansprüche,
dadurch gekennzeichnet,
daß der Antriebsschieber (20) ringsegmentförmig gekrümmt ist und mit in Richtung auf den Grundkörper (= Konsole 1) weisender Konkavseite im Schwenkarm (2) gelagert ist.

## Claims

1. Device for tensioning and tightening lashing cords
- having a base bracket (1) which can be fixed in the lashing cord,
- having a tensioning shaft (4), which is rotatably mounted and rotatably drivable in the bracket (1), for receiving and for winding up a lashing strap free end, and
- having a locking mechanism, acting between the bracket (1) and the tensioning shaft (4), for preventing the tensioning shaft (4) from rotating back,
comprising
- a ratchet wheel (3, 3′) which is operatively connected to the tensioning shaft (4) and has a toothing as a locking piece, and
- at least two locking slides (5, 5′) as locking elements which are mounted on the bracket (1) and which
- by the action of pressure thereon can be displaced in the direction of the ratchet wheel (3, 3′) and
- can be brought into engagement with the toothing of the ratchet wheel (3, 3′) at different points,
characterized
in that in order to reduce the constructional height of the bracket (1) one locking slide (5′) is constructed to be curved.

2. Device according to Claim 1,
characterized
- in that the bracket (1) has a substantially U-shaped cross-section which runs in the transverse direction (8) and whereof the U-legs form two mutually parallel bracket side walls 7, 7′ which extend in the longitudinal direction (6), and
- in that the bracket side walls 7, 7′ are penetrated in the transverse direction (8) by locking guide slots (32, 32′/33, 33′).

3. Device according to Claim 1 and 2,
characterized
- in that the locking slides (5, 5′) are prevented from displacement in the transverse direction (8) and are mounted to be substantially longitudinally displaceable in the locking guide slots (32, 32′/33, 33′), and
- in that the locking guide slots (32, 32′/33, 33′) form prismatic push guides, running substantially in the longitudinal direction (6), for the locking slides (5, 5′).

4. Device according to one or more of the preceding claims,
characterized
in that the curved locking slide (5′) is mounted in a curved locking guide slot (33, 33′) which is matched to its curvature, to be displaceable and pivotal in its direction of curvature.

5. Device according to one or more of the preceding claims,
characterized
in that a locking slide (5′) which is curved in the shape of a ring segment lies mounted in a locking guide slot (33, 33′) which is correspondingly curved in the shape of a ring segment.

6. Device according to one or more of the preceding claims,
characterized
in that two locking slides (5, 5′) are arranged to be offset such that one of the locking slides (5, 5′) is in a position in which it engages with the ratchet teeth (25) carried by the ratchet wheel (3, 3′), while the second locking slide (5, 5′) is in a position in which it does not engage with the ratchet teeth (25).

7. Device according to Claim 6,
characterized
in that the spacing of the engaging position of the first locking slide (5, 5′) from the engaging position of the second locking slide (5, 5′) corresponds to the amount of one and a half times the tooth pitch (t) of the toothing formed by the ratchet teeth (25).

8. Device according to one or more of the preceding claims,
characterized by
a pivotal arm (2) which is pivotally mounted on the bracket (1), for rotary driving of the tensioning shaft (4), the tensioning shaft (4) forming the bearing journal of the pivotal bearing for the pivotal arm (2).

9. Device according to one or more of the preceding claims,
characterized by
a drive slide (20) which can be brought into engagement with the ratchet wheel and is mounted to be displaceable on the pivotal arm, for introducing the force for the rotary driving of the tensioning shaft (4).

10. Device according to one or more of the preceding claims,
characterized
- in that the locking mechanism is a tooth-aligning locking mechanism, and
- in that the drive slide (20) and the locking slides (5, 5′) can be latched in the manner of pawls in form fit manner with the toothing of the ratchet wheel (3, 3′).

11. Device according to one or more of the preceding claims,
characterized
in that the locking slides (5, 5′) lie, acted upon by pressure by a spring element (30, 30′), in the locking guide slots (32, 32′/33, 33′) in the direction of the ratchet wheel (3, 3′).

12. Device, in particular according to one or more of the preceding claims,
characterized
in that the two locking slides (5, 5′) bear by means of their ends forming the bearing surfaces (31, 31′) and remote from the ratchet wheel against a common spring element (41).

13. Device according to Claim 12,
characterized
in that the spring element (41) is a leg spring which lies in the transverse direction (8) and against the two opposite legs (42, 42′) of which there bears a respective locking slide (5, 5′) by means of its bearing surface (31, 31′).

14. Device according to one or more of the preceding claims,
characterized
in that the spring element (41) can be fixed on a holding bow (43), projecting in the direction of the pivotal arm (2), on the bracket (1).

15. Device according to one or more of the preceding claims,
characterized by
two curved locking slides (5, 5′) such that they lie mounted by means of their mutually facing concave sides in correspondingly curved locking guide slots (32, 32′/33, 33′) and their convex sides are remote from one another.

16. Device according to Claim 18,
characterized by
a ring segment-like shape of both locking slides (5, 5′) such that the regions engaging into the ratchet wheel (3, 3′) and the bearing surfaces (31, 31′) can be moved towards one another in the manner of pawls when the locking slides (5, 5′) are displaced in the locking guide slots (32, 32′/33, 33′) in the shape of a ring segment.

17. Device according to one or more of the preceding claims,
characterized
in that the transverse spring coil of the leg spring (41) can be fixed in embedded manner between the concave sides of the locking slides (5, 5′).

18. Device according to one or more of the preceding claims,
characterized
in that the drive slide (20) is curved in the shape of a ring segment and is mounted in the pivotal arm (2) with the concave side pointing in the direction of the base body (= bracket 1).

## Revendications

1. Dispositif de tensionnement et d'arrimage de liens d'arrimage comportant
- un console de base (1) qui peut être fixée au lien d'arrimage,
- un arbre de tensionnement (4) monté et entraînable en rotation dans la console (1) et permettant de recevoir et de dérouler une extrémité libre de lien d'arrimage et
- un encliquetage agissant entre la console (1) et l'arbre de tensionnement (4) en tant que sécurité de l'arbre de tensionnement (4) contre une rotation inverse, composé
-- d'une roue de blocage (3, 3′) reliée en déplacement avec l'arbre de tensionnement (4), et comprenant une denture servant d'élément de blocage et
-- d'au moins deux loquets de blocage (5, 5′) agencés sur la console (1) et servant de bloqueurs qui
--- peuvent être déplacés sous la sollicitation de la pression en direction de la roue de blocage (3, 3′) et
--- peuvent être amenés à différents endroits en engagement dans la denture de la roue de blocage (3, 3′),
caractérisé en ce que pour réduire la hauteur de construction de la console (1), un loquet de blocage (5′) est réalisé incurvé.

2. Dispositif selon la revendication 1, caractérisé en ce que
- la console (1) présente une section sensiblement en forme de U qui s'étend en direction transversale (8), dont les bras du U forment deux parois latérales de la console (7, 7′), agencées parallèlement l'une de l'autre dans la direction longitudinale (6) et en ce que
- les parois latérales de la console (7, 7′) sont traversées dans la direction transversale (8) par des fentes de guidage du loquet (32, 32′/33, 33′).

3. Dispositif selon la revendication 1 et 2, caractérisé en ce que
- les loquets de blocage (5, 5′) sont assurés contre le déplacement en direction transversale (8) et montés à déplacement essentiellement longitudinal dans les fentes de guidage du loquet (32, 32′/ 33, 33′) et en ce que
- les fentes de guidage du loquet (32, 32′/ 33, 33′) forment pour les loquets de blocage (5, 5′) des prismes de guidage de poussée s'étendant essentiellement en direction longitudinale (6).

4. Dispositif selon l'une ou plusieurs des revendications précédentes, caractérisé en ce que le loquet de blocage incurvé (5′) est monté pivotant et à déplacement dans la direction de sa courbure dans une fente de guidage du loquet (33, 33′) incurvée, adaptée à sa courbure.

5. Dispositif selon l'une ou plusieurs des revendications précédentes, caractérisé en ce qu'un loquet de blocage incurvé (5′) en forme de segment annulaire est logé dans une fente de guidage du loquet (33, 33′) incurvée en forme correspondante de segment annulaire.

6. Dispositif selon l'une ou plusieurs des revendications précédentes, caractérisé en ce que deux loquets de blocage (5, 5′) sont agencés en décalage, de telle sorte qu'un des loquets de blocage (5, 5′) est en engagement avec les dents (25) portées par la roue de blocage (3, 3′) tandis que le second loquet de blocage (5, 5′) est hors d'engagement vis-à-vis des dents (25).

7. Dispositif selon la revendication 6, caractérisé en ce que la distance entre la position d'engagement du premier loquet de blocage (5, 5′) et la position d'engagement du second loquet de blocage (5, 5′) correspond à une fois et demi le pas (t) de la denture formée par les dents (25).

8. Dispositif selon l'une ou plusieurs des revendications précédentes, caractérisé par un bras pivotant (2) monté pivotant sur la console (1) pour l'entraînement en rotation de l'arbre de tensionnement (4), l'arbre de tensionnement (4) formant le tourillon du palier pivotant pour le bras pivotant (2).

9. Dispositif selon l'une ou plusieurs des revendications précédentes, caractérisé par un loquet d'entraînement (20), monté à déplacement sur le bras pivotant, pouvant être amené en engagement avec la roue de blocage pour amorcer la force d'entraînement en rotation de l'arbre de tensionnement (4).

10. Dispositif selon l'une ou plusieurs des revendications précédentes, caractérisé en ce que
- l'encliquetage est un encliquetage unidirectionnel denté et en ce que
- le loquet d'entraînement (20) et les loquets de blocage (5, 5′) peuvent s'encliqueter comme des cliquets en blocage de forme avec la denture de la roue de blocage (3, 3′).

11. Dispositif selon l'une ou plusieurs des revendications précédentes, caractérisé en ce que les loquets de blocage (5, 5′) sont montés dans les fentes de guidage de loquets (32, 32′/33, 33′) en étant sollicités par la pression d'un élément de ressort (30 30′) dans la direction de la roue de blocage (3, 3′).

12. Dispositif en particulier selon l'une ou plusieurs des revendications précédentes, caractérisé en ce que les deux loquets de blocage (5, 5′) prennent appui sur un élément de ressort commun (41) avec leurs extrémités opposées à la roue de blocage et formant les surfaces d'appui (31, 31′).

13. Dispositif selon la revendication 12, caractérisé en ce que l'élément de ressort (41) est un élément de ressort à branches agencé en direction transversale (8), sur les deux branches opposées (42, 42′) duquel un loquet de blocage (5, 5′) vient respectivement en contact par sa surface d'appui (31, 31′).

14. Dispositif selon l'une ou plusieurs des revendications précédentes, caractérisé en ce que l'élément de ressort (41) peut être fixé sur la console (1), sur un étrier de retenue (43) faisant saillie en direction du bras pivotant (2).

15. Dispositif selon l'une ou plusieurs des revendications précédentes, caractérisé par deux loquets de blocage (5, 5′) incurvés de telle manière qu'ils sont montés avec leurs faces concaves orientées l'une vers l'autre dans des fentes de guidage de loquets (32, 32′/33, 33′) incurvées de manière correspondante et que leurs faces convexes sont opposées l'une à l'autre.

16. Dispositif selon la revendication 15, caractérisé par une forme en segment annulaire des deux loquets de blocage (5, 5′) de telle sorte que les régions en engagement dans la roue de blocage (3, 3′) et les surfaces d'appui (31, 31′) peuvent être déplacées les unes vers les autres à la manière de cliquets lors du déplacement des loquets de blocage (5, 5′) dans les fentes de guidage de loquets (32, 32′/33, 33′) en forme de segments annulaires.

17. Dispositif selon l'une ou plusieurs des revendications précédentes, caractérisé en ce que la spire transversale du ressort à branches (41) peut être emprisonnée entre les faces concaves des loquets de blocage (5, 5′).

18. Dispositif selon l'une ou plusieurs des revendications précédentes, caractérisé en ce que le loquet d'entraînement (20) est incurvé en forme de segment annulaire et monté dans le bras pivotant (2) avec sa face concave dirigée vers le corps de base (= console 1).
